# EUROPEAN PATENT APPLICATION

(11) **EP 1 819 144 A1**
(43) Date of publication of application: **15.08.2007**
(21) Application number: 07101792.5
(22) Date of filing: 06.02.2007
(51) Int. Cl.: H04N 3/14

(54) **Electronic imaging device with photosensor arrays**

(30) Priority: 13.02.2006 US 773095 P; 28.12.2006 US 646678
(71) Applicant: GE Inspection Technologies, LP, Lewistown, PA 17044 (US)
(72) Inventor: Lia, Raymond A., Auburn, NY 13021-3726 (US)
(74) Representative: Bedford, Grant Richard

(57) **Abstract**

An electronic imaging device including a first plurality of photosensitive elements. Each of the first plurality of photosensitive elements has a first light acceptance numerical aperture. The electronic imaging device further includes a second plurality of photosensitive elements where each of the photosensitive elements of the second plurality of photosensitive elements is disposed proximate to a respective photosensitive element of the first plurality of photosensitive elements thereby forming a plurality of dual photosensitive elements. Each of the second plurality of photosensitive elements has a second light acceptance numerical aperture, where the second light acceptance numerical aperture is less than the first light acceptance numerical aperture.

## Description

The present invention relates generally to electronic imaging devices, and particularly to electronic imaging devices with multiple photosensor arrays.

Traditional solid state imaging devices, such as those based on CCD (charge coupled device) and CMOS (complementary metal oxide semiconductor) imaging devices, typically consist of a two-dimensional array of photosensors that are distributed on a surface or layer of a semiconductor chip, as well as an optical system used to focus an image (in the form of light passing through an aperture) onto the array. Each photosensor of the array commonly is referred to as a "picture element" or "pixel." The amount of light energy reaching each photosensor is recorded and stored, and the output of the photosensors, in the aggregate, forms a captured image. Such imaging devices, or "imagers," can be configured to capture either gray scale images or color images. Color imagers are generally configured to have groupings of adjacent red, blue and green pixels forming the photosensor array.

It is generally desirable for the optical system of such imagers to collect as much light as possible while still providing the largest possible depth of field in the produced imager. The phrase, "depth of field," as used herein, refers to the areas of an image that remain in focus both in front (i.e., closer to the photosensor array) of, and behind the main focus point of the optical system. Depth of field can be affected by the aperture of the optical system and by the distance to the object being imaged, with a closer object producing a shallower depth of field, as well as with shorter focal lengths producing a greater depth of field.

An optical system's numerical aperture ("NA") is the controlling feature that governs the total amount of light available to the imager, and is generally defined as a ratio of an aperture of a lens of the optical system to the focal length of the lens. Mathematically speaking, the NA is one half of the diameter, d, of the aperture opening divided by the focal length of the lens, *f*. In a digital imager, the focal length refers to the optical distance between the lens assembly and the surface of the photosensor array when a desired image is focused onto the array.

The depth of field of an imager and brightness of an imager captured by an imager are functions of NA and of the number of photosensors which provide the image's spatial resolution. These parameters are interrelated to effectively require a trade-off between the brightness of a captured image and the depth of field of the image. Put another way, in existing imagers, bright images are desirable (to illuminate visual details within the image), but the brighter the image, the smaller the depth of field, and vice versa.

This trade-off is readily illustrated in, for example, a conventional CCD-type endoscope or borescope, where illumination is usually limited by environmental conditions, thus favoring a design with a large enough aperture to provide a usable amount of light and impart brightness, but small enough so that sufficient depth of field is provided for a specific application. Often times, such a compromise sacrifices the best of both worlds, resulting in a dim image with poor depth of field.

Another drawback associated with conventional imagers arises from the complex and delicate (usually mechanical) systems required to move the lens of the optical system and to change the light-admitting aperture of the optical system.

It is an object of the present invention to provide an electronic imaging device that allows for the capture and display of images that are both bright and of a high depth of field.

Thus, in one aspect of the present invention, an imager is provided comprising a first plurality of photosensitive elements and a second plurality of photosensitive elements. Each of the photosensitive elements of the second plurality of photosensitive elements is disposed proximate to a respective photosensitive element of the first plurality of photosensitive elements, thereby forming a plurality of dual photosensitive elements.

Each of the first plurality of photosensitive elements has a first light acceptance numerical aperture. Each of the second plurality of photosensitive elements has a second light acceptance numerical aperture, wherein the second light acceptance numerical aperture is less than the first light acceptance angle.

In a further aspect of the present invention, there is provided a charge coupled device (CCD) including a plurality of photosensors. Each of the plurality of photosensors includes a first photodetector having a first light acceptance numerical aperture and a second photodetector having a second light acceptance angle, the second light acceptance numerical aperture being smaller than the first light acceptance numerical aperture.

In yet another aspect of the present invention, there is provided a charge coupled device comprising a plurality of first photosensor elements having a first light acceptance numerical aperture. Each of the plurality of first photosensor elements has disposed proximate to it at least a second photosensor element having a second light acceptance numerical aperture wherein the second light acceptance numerical aperture is less than the first light acceptance numerical aperture.

According to yet another alternative embodiment, there is provided an imaging device. The imaging device includes at least one lens and a semiconductor device disposed proximate to a focal plane of at least one lens element. The semiconductor device includes an array of photosensors. The array of photosensors includes a first plurality of photosensors having a first light acceptance numerical aperture and a second plurality of photosensors having a second light numerical aperture. Each of the first plurality of photosensors is disposed proximate to a respective one of the second plurality of photosensors. The imaging device further includes an image processor that is in communication with the semiconductor device.

According to yet another alternative embodiment, there is provided a charge coupled device that includes a first plurality of photosensors that is disposed in a first plane (such as a focal plane) and a second plurality of photosensors also disposed in the first plane. The charge coupled device further includes an aperture mask disposed proximate to the first plane. The aperture mask defines a first plurality of openings and a second plurality of openings. Each of the first plurality of openings defines a first area and each of the second plurality of openings defines a second area, where the first area is greater than the second area. Each of the first plurality of openings is associated with a respective photosensor of the first plurality of photosensors and each of the second plurality of openings is associated with a respective photosensor of the second plurality of photosensors.

Additional features and advantages of various aspects and embodiments of the invention will be set forth in the description which follows, and in part will be readily apparent to those skilled in the art from that description or recognized by practicing the invention as described herein, including the description which follows, the claims, as well as the appended drawings.

It is to be understood that both the foregoing general description and the following detailed description are merely illustrative examples of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the present invention and together with the description serve to explain the principles and operations of the invention, in which:
FIGURE 1 is a video inspection device according to an embodiment of the present invention;
FIGURE 1A is schematic representation of an imaging device according to an embodiment of the present invention;
FIGURE 1B is a schematic representation of an alternative embodiment of the imaging device of figure 1A;
FIGURE 1C is an enlarged fragmentary view of the multi-element photosensor shown schematically in figure 1B;
FIGURE 2A is an enlarged fragmentary view of one embodiment of an image sensor chip of the present invention;
FIGURE 2B is an enlarged fragmentary view of an alternative embodiment of an image sensor chip of the present invention;
FIGURE 2C is an enlarged fragmentary view of an alternative embodiment of an image sensor chip of the present invention;
FIGURE 2D is an enlarged fragmentary view of an alternative embodiment of an image sensor chip of the present invention;
FIGURE 2E is an enlarged fragmentary view of an alternative embodiment of an image sensor chip of the present invention;
FIGURE 3A is a graphical representation of the signals from a plurality of small numerical aperture photosensors of an embodiment the present invention;
FIGURE 3B is a graphical representation of the signals from a plurality of large numerical aperture photosensors that are associated with the small numerical aperture photosensors whose signals are depicted in figure 3A;
FIGURE 3C is a graphical representation, after processing, of the combination of the signals shown in figure 3A and figure 3B; The magnitude of 3A and 3B need not be the same.
FIGURE 4A is a fragmentary cross sectional view of an image sensor chip according to an embodiment of the present invention;
FIGURE 4B is a fragmentary cross sectional view of an alternative image sensor chip according to an embodiment of the present invention; and
FIGURE 4C is an enlarged fragmentary view of an alternative embodiment of an image sensor chip of the present invention.

It is to be understood that the invention is not limited in its application to the details of construction and arrangements of components set forth herein in the detailed description of the preferred embodiment or illustrated in the drawings. The invention is capable of other embodiments and of being practiced or being carried out in various ways.

Reference will now be made in detail to the present preferred embodiments of the invention, examples of which are illustrated in the accompanying drawings. Whenever possible, the same reference numerals will be used throughout the drawings to refer to the same or like parts for clarity.

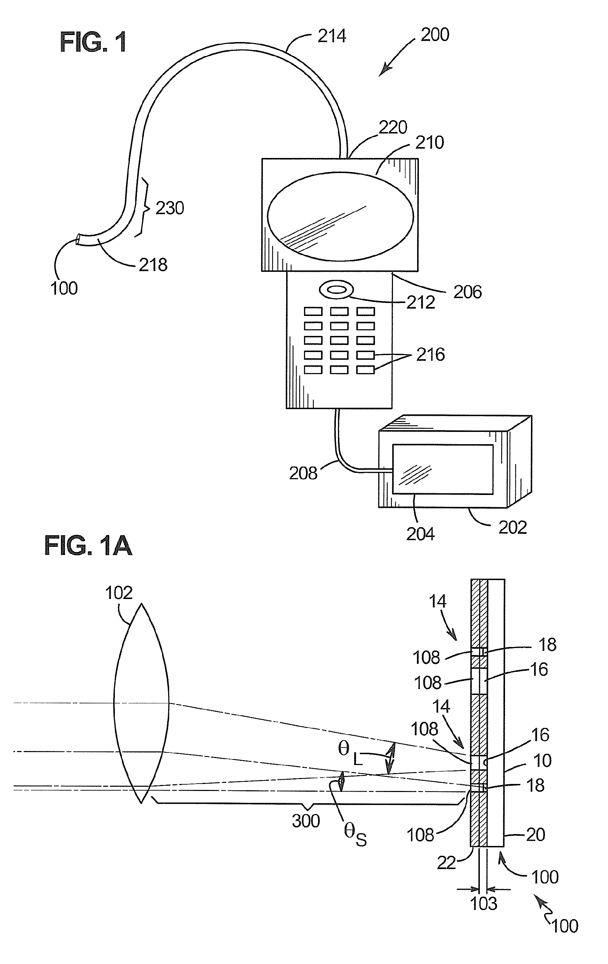

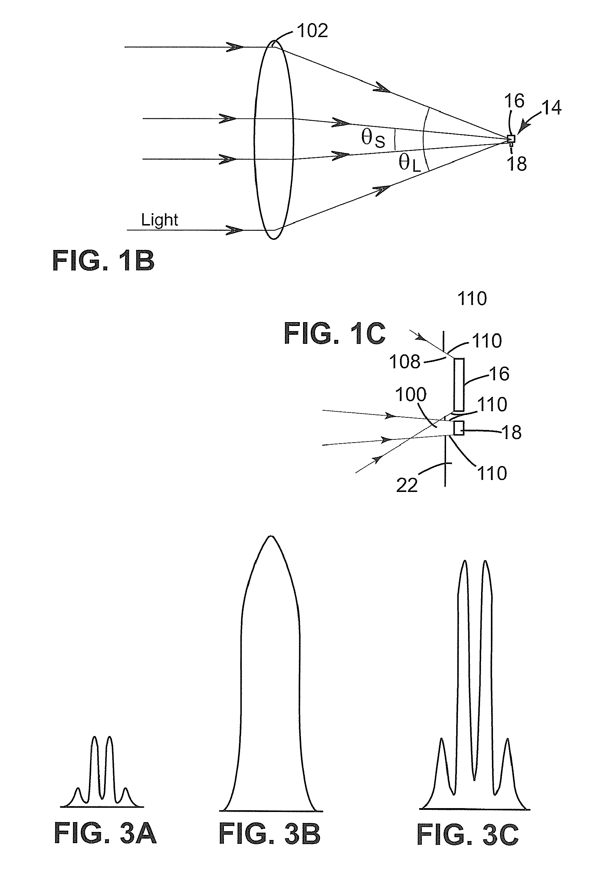

Referring to figure 1, a video imaging inspection device 200 (a borescope in the illustrative embodiment) according to an embodiment of the invention is illustrated of the type commercially available, for example, from Everest VIT, Inc. of Flanders, New Jersey. Such a device could include, as shown in the illustrative embodiment, a portable shipping/operating case 202, that includes a power supply 204 for the device and a light source, such as a metal halide arc lamp (not shown). The shipping/operating case 202 is shown in operative communication with a handpiece 206 by means of a cable 208. The handpiece 206 can include, by way of example, an LCD monitor 210 (that displays images seen by the imaging device), a joystick control 212 (for articulating a distal end 218 of the video imaging inspection device 200), and a button set 216 (for accessing measurement, digital, and measurement controls associated with the video imaging inspection device 200). The handpiece 206 also is connected to an insertion tube 214, which terminates in a distal end 218. As used herein, the term "distal" shall mean "in the direction of the tip of the borescope, furthest from the handpiece 206." The insertion tube 220 can be sized according to the desired application, by varying a diameter and a length of the insertion tube 214. The interior of the insertion tube 214 (not shown) can include standard imager lines and communication/control means, such as fiber-optic cables and articulation wires.

The distal end 218 of the insertion tube 214 of the video imaging inspection device 200 includes an image sensor 100 that includes a lens system and a imaging chip 100.

Referring to Figure 1A, there is shown a schematic representation of an imaging device 100 in which the present invention is embodied. Additional detail regarding the imaging device is disclosed in commonly owned U.S. Patent Application Serial No. 10/768,761 filed January 29, 2004, the entire disclosure of which is hereby incorporated by reference. The imaging device 100 includes a lens 102 and an image sensor 104 each disposed along an imaging or optical axis. The lens 102 is configured to focus parallel rays of light onto a focal plane 103, thereby allowing an image to be focused onto the image sensor 104. The image sensor 104 includes a photosensitive chip 10 that includes an array of multi-element photosensors 16, 18 disposed on a substrate 20. Each of the plurality of multi-element photosensors 16, 18 is disposed at or near the focal plane 103 of the lens 102. Each of the multi-element photosensors 16, 18 includes at least one large numerical aperture photosensor 16 and at least one small numerical aperture photo sensor 18. "Numerical aperture" is defined herein as the sine of the vertex angle of the largest cone of meridional rays that can enter or leave an optical system or element, multiplied by the refractive index of the medium in which the vertex of the cone is located. As used herein, the terms "large numerical aperture photosensor" and "small numerical aperture photosensor" are comparative reference terms, that is to say a large numerical aperture photosensor is a photosensor that has a greater numerical aperture, or light acceptance angle, than a small numerical aperture photosensor. Depending upon the specific requirements of the device, both the large numerical aperture photosensors and the small numerical aperture photosensors could have what are conventionally considered large or small numerical apertures. The photosensitive chip 10 can further include an aperture mask layer 22. The aperture mask layer 22, may be, for example, a layer of opaque material that is deposited using conventional semiconductor chip manufacturing technologies. Openings 108 are made using conventional photolithographic and etching techniques.

As shown in figure 1A, the size of the large numerical aperture photosensors 16 and the associated opening 108 in the aperture mask layer 22 work together to define the light acceptance angle θ_{L} for the large numerical aperture photosensor. Similarly, the size of the small numerical aperture photosensors 18 and the associated opening 108 in the aperture mask layer 22 work together to define the light acceptance angle θ_{S} for the small numerical aperture photosensor.

In one embodiment, as shown in figure 1B, in which the multi-element photosensor 16, 18 includes a large numerical aperture photosensor 18 and a small numerical aperture photosensor 18, the large numerical aperture photosensor 16 and its associated small numerical aperture photosensor 18 are positioned such that the vertices of their respective light acceptance angles θ_{L}, θ_{S} are as close to coincident as possible. Such a placement allows the converging cone of light received by the small numerical aperture photosensor 18 to be substantially centered within the converging cone of light received by the large numerical aperture photosensor 16. This arrangement allows the clearest or best resolution image to be captured because the same point of the target image is captured by both photosensors, thereby minimizing the blurring of the image. Figure 1C shows an enlarged schematic cross sectional view of the multi-element photosensor 16, 18. The influence of the configuration of the openings 108 on the numerical aperture of the large and small numerical aperture photosensors 16, 18 is shown. The walls 110 of the openings 108 in the aperture mask layer 22 can be sloped to approximate the respective light acceptance angles for each photosensor, thereby allowing the maximum amount of light to reach each photosensor 16, 18. The slope angles of the sides 110 depends upon the optical characteristics, such as, for example the focal length of the lens 102.

In other embodiments of the present invention however, it is possible to arrange the large and small numerical aperture photosensors 16, 18 in such a manner that the converging cones of light only partially overlap. Furthermore, because each photosensor generates an electrical signal proportional to the light incident upon it and each of these signals is read and stored separately, the electrical signals can be combined using signal processing algorithms in any combination to achieve a desired effect in the resultant image.

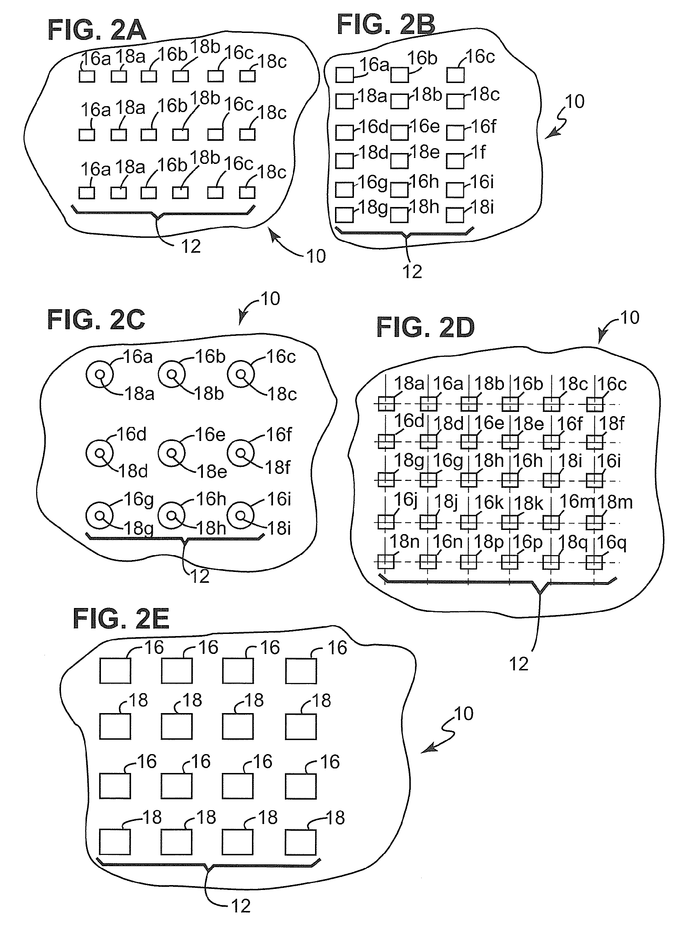

Turning now to various illustrative embodiments of the photosensitive chip 10 of an embodiment of the present invention, referring to figure 2A, figure 2B, figure 2C, figure 2D and figure 2E, there are shown front plan views of various embodiments of the photosensitive chip 10 of an embodiment of the present invention. The chip 10 includes a n x n array 12 of multi-element photosensors. Each multi-element photosensor includes one large numerical aperture photosensor 16 and at least one small numerical aperture photosensor 18. Each large numerical aperture photosensor 16 and each small numerical aperture photosensor 18 generate an individual electrical signal that is proportional to the intensity of light incident upon the respective photosensor. The two electrical signals from the large and small numerical aperture photosensors 16, 18 that make up the multi-element photosensor are combined using digital signal processing techniques (discussed below) to produce a composite electrical signal. The relative numerical apertures of the large numerical aperture pixels and the small numerical aperture pixels are chosen based upon the usage requirements of the imaging device. For example, in a borescope application the large numerical aperture pixels may be designed to have an F number from about F1 to about F4, and the small numerical aperture pixels may be designed to have and F number from about F12 to about F25, and the ratio of the large numerical aperture to the small numerical aperture may be in the range from about 3 to about 25.

In one embodiment, as shown in figure 2A, each multi-element photosensor 14 includes a single large numerical aperture photosensor 16 and a single small numerical aperture photosensor 18. In the embodiment shown in figure 2a, the large numerical aperture photosensors 16a, 16b, 16c, 16d, 16e, 16f, 16g, 16h, 16i are shown disposed in a two dimensional rectangular grid-like array having about a 5 µm periodicity. The small numerical aperture photosensors 18a, 18b, 18c, 18d, 18e, 18f, 18g, 18h, 18i are likewise disposed in a two dimensional grid-like array, wherein each of the small numerical aperture photosensors 18 is disposed proximate to an associated large numerical aperture photosensor 16. Figure 2A shows the small numerical aperture photosensors 18a, 18b, 18c, 18d, 18e, 18f, 18g, 18h, 18i disposed in the same rows as their associated large numerical aperture photosensors 16a, 16b, 16c, 16d, 16e, 16f, 16g, 16h, 16i. It will be appreciated by those of ordinary skill in the art however, that the relative placement of the large numerical aperture pixel 16 and its associated small numerical aperture pixel 18 are design choices that depend on the both the capabilities of the chip manufacturing process and the optical system with which the chip 10 is to be used. For example, figure 2B shows an alternative embodiment of the chip 10 of the present invention. Each large numerical aperture photosensor 16 still has a small numerical aperture photosensor 18 disposed proximate to the large numerical aperture photosensor 16 with which it is associated. In the illustrated embodiment, however, the large numerical aperture photosensors are arranged in a two dimensional grid-like array 16a, 16b, 16c, 16d, 16e, 16f, 16g, 16h, 16i and the small numerical aperture photosensors 18a, 18b, 18c, 18d, 18e, 18f, 18g, 18h, 18i are disposed in two dimensional grid-like array in which rows of the large numerical aperture photosensors alternate with rows of small numerical aperture photosensors. Thus, the large numerical aperture photosensor 16 and is associated small numerical aperture photosensor 18 are disposed in the same column. An aperture mask layer 22 (shown in Figure 1A) is applied to the chip and is used in conjunction with the selected sizes of the photosensor elements to configure each photosensor element to have a desired numerical aperture.

In yet another alternative embodiment of the chip 10, as shown in figure 2C, the large numerical aperture photosensors 16a, 16b, 16c, 16d, 16e, 16f, 16g, 16h, 16i are annular photosensors that are arranged in a two dimensional grid-like array. The large numerical aperture photosensors 16a, 16b, 16c, 16d, 16e, 16f, 16g, 16h, 16i are substantially annular in shape. The small numerical aperture photosensors 18a, 18b, 18c, 18d, 18e, 18f, 18g, 18h, 18i are sized to fit within the central opening of the annulus of the large numerical aperture photosensors 16a, 16b, 16c, 16d, 16e, 16f, 16g, 16h, 16i and are disposed within the boundaries of their associated large numerical aperture photosensors 16a, 16b, 16c, 16d, 16e, 16f, 16g, 16h, 16i. The small numerical aperture photosensors 18a, 18b, 18c, 18d, 18e, 18f, 18g, 18h, 18i may be of any shape, such as, for example, circular, hexagonal or rectangular. The shape of the small numerical aperture photosensors 18 is a design choice depending upon a variety of factors, including among other considerations, the chip manufacturing processes, the form factor of the large numerical aperture photosensor, and the design of the associated optical system. In one embodiment of the chip 10 of the present invention, the annular photosensor and the central photosensor, while coincident with one another, are disposed at different distances from the lens 102. In one embodiment, the small numerical aperture photosensors 18a, 18b, 18c, 18d, 18e, 18f, 18g, 18h, 18i are substantially centered within the large numerical aperture photosensors 16a, 16b, 16c, 16d, 16e, 16f, 16g, 16h, 16i. In an alternative embodiment, the centroids of the small numerical aperture photosensors 18a, 18b, 18c, 18d, 18e, 18f, 18g, 18h, 18i are not substantially collocated with the centroids of the large numerical aperture photosensors 16a, 16b, 16c, 16d, 16e, 16f, 16g, 16h, 16i.

It should be noted, however, that although the large numerical aperture photosensors 16 and the small numerical photosensors 18 have been depicted in figure 2A and figure 2B as rectangular elements and figure 2C as circular elements, these geometric representations are merely for convenience in gaining an understanding of possible embodiments of the present invention. It will be appreciated by those skilled in the art of designing photo sensitive chips that the geometric shape of each photosensor element is a unique design choice well within the capabilities of those of ordinary skill in the art and the geometric shapes used to illustrate the accompanying figures are in no way a limitation of the present invention.

In yet another embodiment, as shown in figure 2D, the chip 10 of the present invention includes a first two-dimensional grid-like array of large numerical aperture photosensors 16a, 16b, 16c, 16d, 16e, 16f, 16g, 16h, 16i, 16j, 16k, 16m, 16n, 16p, 16q and a second two-dimensional grid-like array of small numerical aperture photosensors 18a, 18b, 18c, 18d, 18e, 18f, 18g, 18h, 18i, 18j, 18k, 18m, 18n, 18p, 18q. The two arrays are disposed such that each element of an array is adjacent to four elements of the other array. In other words, the large and small numerical apertures alternate by both rows and columns. This configuration lends itself to very flexible post-image capture signal processing. In this configuration each multi-element photosensor 14 includes a single large numerical aperture photosensor 16, the electrical signal of which is combined with up to four small numerical aperture photosensor elements 18 associated with it, or a single small numerical aperture photosensor 18, the electrical signal of which may be combined with the electrical signals of up to the four adjacent large numerical aperture photosensors. As will be appreciated by those skilled in the art, this configuration of the chip 10 allows much flexibility in selecting which electrical signals from large numerical aperture photosensors 16 to combine with which electrical signals from the small numerical aperture photosensors. For example, in one embodiment, the present invention is configured to combine the electrical signals from small numerical aperture photosensors 18b, 18d, 18e and 18h with the electrical signal from large numerical aperture photosensor 16e and the electrical signals from small numerical aperture photosensors 18c, 18e, 18f and 18i with the electrical signal from large numerical aperture photosensor 16f. Thus, the electrical signal from a multiple small numerical aperture photosensor may be combined with the electrical signal from a single large numerical aperture photosensors.

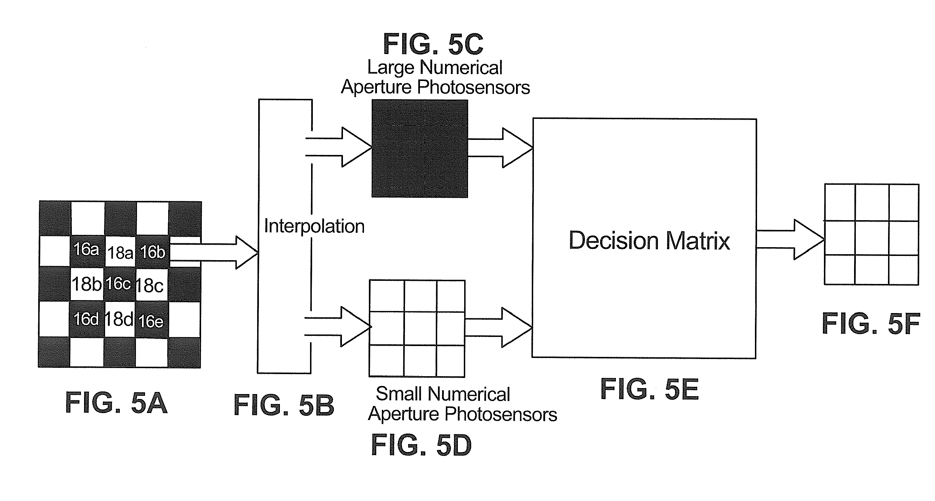

In yet another embodiment, as shown in figure 5, the chip 10 of the present invention includes a first two-dimensional grid-like array of large numerical aperture photosensors 16a, 16b, 16c, 16d, 16e and a second two-dimensional grid-like array of small numerical aperture photosensors 18a, 18b, 18c, 18d. The two arrays are disposed such that each element of an array is adjacent to four elements of the other array. In other words, the large and small numerical apertures alternate by both rows and columns. In this configuration, both the large numerical aperture photosensors 16 and the small numerical aperture photosensors 18 are monochromatic, configured to capture a gray scale image. As the chip is read out, the small numerical aperture photosensor electrical signals are kept separate from the electrical signals of the large numerical aperture photosensors 16. These separated electrical signals are then subjected to an interpolation process, shown in figure 5b. This interpolation process is carried out in parallel for both the large numerical aperture electrical signals and the small numerical aperture electrical signals. In the case of the large numerical aperture photosensors 16a and 16b in figure 5a, the electrical signal derived from these photosensors has a discontinuity during the time period in which the small numerical aperture photosensor 18a is being read out. The interpolation processor, figure 5b calculates a suitable electrical signal value to replace this discontinuity. This replacement electrical signal is comprised of a combination of electrical signals from the four large numerical aperture photosensors adjacent to the single small numerical aperture photosensor 18a . Similarly, in the case of the small numerical aperture photosensors 18b and 18c in figure 5a, the electrical signal derived from these photosensors has a discontinuity during the time period in which the large numerical aperture photosensor 16c is being read out. The interpolation processor, figure 5b calculates a suitable electrical signal value to replace this discontinuity. This replacement electrical signal is comprised of a combination of electrical signals from the four small numerical aperture photosensors adjacent to the single large numerical aperture photosensor 16c. The output of the interpolation process is two parallel image arrays, one of large numerical aperture photosensors as shown in figure 5c and another of small numerical aperture photosensors as shown in figure 5d. These two parallel image arrays are input into a decision matrix figure 5e. For each element of the output image figure 5f, a decision is made between the high brightness of a large numerical aperture element from array figure 5c and the increased depth of field of a small numerical aperture element from array figure 5d. Thus the output image figure 5e is a combination of large and small numerical aperture elements. An example of this embodiment would be a scene with a well illuminated foreground and a dark background. The decision matrix would select small numerical aperture elements to image the foreground and large numerical aperture elements for the darker background, thus rendering a composite image of better quality than one composed of a single numerical aperture which must trade off between the brightness of a captured image and the depth of field of the image. It should be noted that although this example utilized a 3 x 3 matrix, other size matrices may be used to suit different imager sizes and processing requirements.

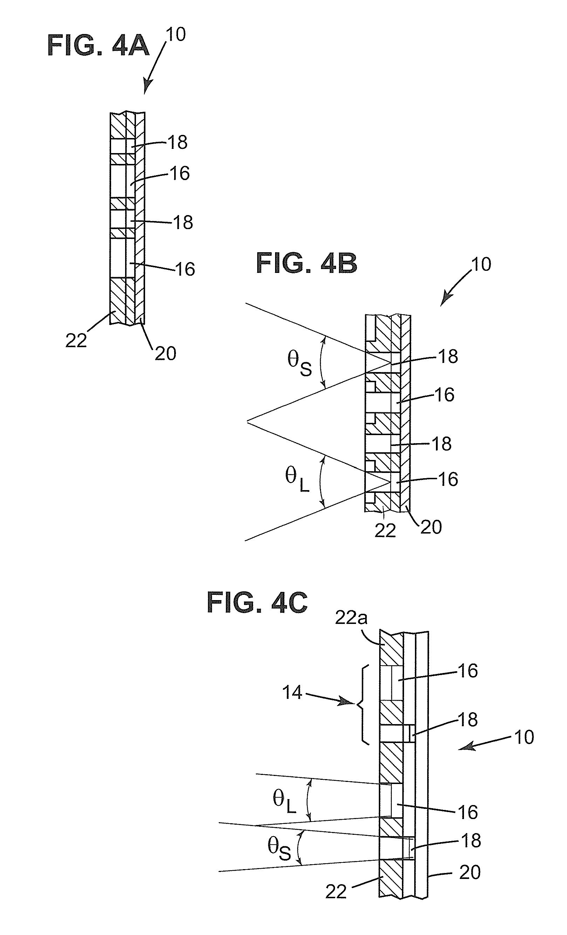

Turning to figure 2E, an alternative embodiment of the image sensing chip 10 of the present invention is shown. The image sensor chip 10 includes a two-dimensional grid-like array of large numerical aperture photosensor elements 16, and a two-dimensional grid-like array of small numerical aperture photosensor elements 18 disposed on a substrate 20. Unlike previously discussed embodiments, in this embodiment, both the large and small numerical aperture photosensors 16, 18 have the same light receiving areas. A better understanding of the configuration of the image sensing chip 10, may be gained by turning to figure 4B. The height of the mask layer 22 varies across the surface of the image sensing chip 10 and is used to set the numerical aperture for each photosensor. As can be seen the vertex angle θₛ for the small numerical aperture photosensors is less than the vertex angle θ_{L} for the large numerical aperture photosensors.

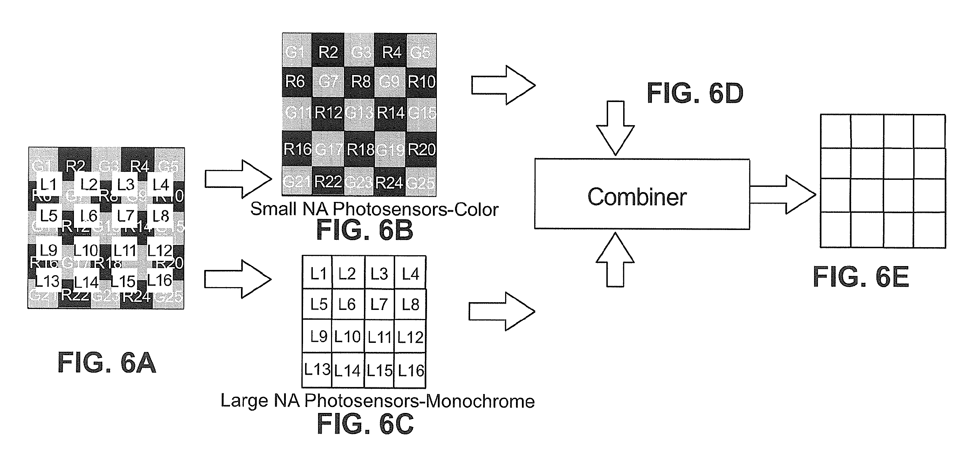

In yet another embodiment, as shown in figure 6, the chip 10 of the present invention includes a first two-dimensional grid-like array of large numerical aperture photosensors L1,L2,L4,L5 ..., and a second two-dimensional grid-like array of small numerical aperture photosensors G1,R2,G3,R4,G5,B6,G7,B8,G9,B10.... The two arrays are disposed as shown in figure 6a. In this configuration, the large numerical aperture photosensors L are monochromatic, configured to capture a gray scale image. The small numerical aperture photosensors G1,R2,G3,R4,G5,B6,G7,B8,G9,B10.... are color, arranged in a industry standard Bayer pattern, to capture a color image. As the chip is read out, the small numerical aperture color photosensor electrical signals are kept separate from the electrical signals of the large numerical aperture monochromatic photosensors. The output of figure 6a is two parallel image arrays, one a monochromatic array of large numerical aperture photosensors as shown in figure 6c and another of small numerical aperture photosensors as shown in figure 6b. These two parallel image arrays are input into a combiner, figure 6d. For each element of the output image figure 6e, an element of the high brightness, monochromatic, large numerical aperture array figure 6c is combined with a color element from the small numerical aperture array figure 6b. The color elements in figure 6b are decoded in an industry standard Bayer decoder (not shown) before combination with the monochrome elements. produce Thus the output image figure 6e is a combination of small aperture color and large aperture monochrome elements. In a well illuminated scene, the color elements predominate and produce a high depth of field color image at output figure 6e. In a dark scene, the output of the small numerical aperture color elements will diminish and the large numerical aperture monochrome elements will predominate, producing a bright, low depth of field image at output figure 6e. In this respect, the combination of small numerical aperture color and high numerical aperture monochrome elements mimic the rod and cone structure of the human eye. It should be noted that although this example utilized a Bayer color encoding, other color encoding methods can be easily adopted.

In an alternative embodiment that is not shown, the numerical aperture of the photosensor elements is controlled by having an aperture mask layer 22 with a substantially uniform thickness, but having the large and small numerical aperture photosensors 16, 18 located on different levels or layers of the substrate 20 of the chip 10.

A better understanding of the configuration of the image sensing chip 10 and the interrelationship between photosensor size and aperture mask layer thickness in determining the numerical aperture for a specific photosensor may be gained by turning to figure 4A. Figure 4A shows a fragmentary cross sectional view of the image senor chip 10 of figure 2A. As can be seen, the image sensor chip 10 includes a substrate 20 on which the large and small numerical aperture photosensors 16, 18 are disposed. In this embodiment, the large and small numerical aperture photosensors 16, 18 are of two different sizes, with the large numerical aperture photosensors 16 having a larger size than the small numerical aperture photosensors 18. The image sensor chip 10 further includes an aperture mask layer 22. The aperture mask layer 22 is deposited on the substrate 20 and etched using conventional photolithography techniques to expose the large and small numerical aperture photosensor arrays. The thickness of the aperture mask layer 22 is chosen in conjunction with the size of the photosensors 16, 18 to provide the desired numerical aperture for a large and small numerical aperture photosensors 16, 18.

Figure 3A shows a representative electrical signal from several of the small numerical aperture pixels, such as, for example a row or column, or a partial row or partial column of the small numerical aperture pixels of an embodiment of the present invention. The small numerical aperture pixels provide a high resolution image signal. This could be a black and white image signal.

Figure 3B shows a representative electrical signal from the corresponding large numerical aperture pixels of the same row or column or partial row or column shown in figure 3a. In contrast to the small numerical aperture pixels, the large numerical aperture pixels produce a signal that has a relatively lower resolution. This could be color information of lower resolution and different amplitude form 3A.

Figure 3C shows a representative processed composite signal in which the electrical signals from the large numerical aperture pixels and their corresponding small numerical aperture pixels have been combined. The processed composite signal is an electrical signal having both large amplitude and high resolution. Thus, producing an image that is superior in depth of field to an image captured using a conventional CCD image sensor. The processed composite signal may then be stored in a stored in a memory device, such as a hard drive, removable optical or magnetic media, etc., for later display or sent to a display for immediate viewing. It will be readily apparent to those skilled in the art of signal processing that many different methods may be used to combine the electrical signals from the large numerical aperture pixels and their associated small numerical pixel or pixels in order to obtain an image having the desired degrees of brightness and resolution. Suitable methods include the use of signal-to-noise subtraction techniques, image stitching algorithms, interpolation techniques, gain balancing and smoothing techniques, among others, to combine the electrical signals from the large and small numerical aperture photosensors and to process these signals to achieve a bright large depth of field imaging system without the aid of moving lenses or varying aperture stops. The use of these techniques is well understood by those of ordinary skill in the art of digital image processing.

In one aspect, the invention includes an electronic imaging device comprising: a first plurality of photosensitive elements, each of the first plurality of photosensitive elements having a first light acceptance angle; a second plurality of photosensitive elements, each of the second plurality of photosensitive elements having a second light acceptance numerical aperture, each photosensitive element of the second plurality of photosensitive elements disposed proximate to a respective photosensitive element of the first plurality of photosensitive elements thereby forming a plurality of dual photosensitive elements; wherein the first light acceptance angle is greater than the second light acceptance angle.

In another aspect, the invention includes an electronic imaging device comprising: a plurality of photosensors, each photosensor including: a first photodetector having a first light acceptance numerical aperture; and second photodetector having a second light acceptance numerical aperture, wherein the second light acceptance numerical aperture is smaller than the first light acceptance numerical aperture. In yet another aspect, the invention includes an electronic imaging device wherein each photosensor includes a third photodetector having a third light acceptance numerical aperture, wherein the third light acceptance numerical aperture is smaller than the first light acceptance numerical aperture. In a further aspect, the invention includes an electronic imaging device wherein each photosensor includes a fourth photodetector having a fourth light acceptance numerical aperture, wherein the fourth light acceptance numerical aperture is smaller than the first light acceptance numerical aperture. In another aspect, the invention includes an electronic imaging device wherein each photosensor includes a fifth photodetector having a fifth light acceptance numerical aperture, wherein the fifth light acceptance numerical aperture is smaller than the first light acceptance numerical aperture.

In yet another aspect, the invention includes an electronic imaging device comprising a plurality of first photosensor elements having a first light acceptance numerical aperture, wherein each of the plurality of first photosensor elements has disposed proximate to it at least a second photosensor element having a second light acceptance numerical aperture wherein the second light acceptance numerical aperture that is less that the first light acceptance numerical aperture.

In a further aspect, the invention includes an imaging device comprising: a lens; a semiconductor device disposed proximate to a focal plane of the lens, the semiconductor device including a plurality of photosensors; and an image processor in communication with the semiconductor device, wherein the plurality of photosensors includes a first plurality of photosensors having a first light acceptance numerical aperture and a second plurality of photosensors having a second light acceptance numerical aperture; wherein each of the first plurality of photosensors is disposed proximate to a respective one of the second plurality of photosensors.

In another aspect, the invention includes an electronic imaging device having a focal plane comprising: a first plurality of photosensors disposed in a first plane wherein said first plane is substantially parallel with the focal plane; a second plurality of photosensors disposed in the first plane; and an aperture mask disposed proximate to the first plurality of photosensors; the aperture mask defining a first plurality of openings and a second plurality of openings; wherein each of the first plurality of openings has a first area; wherein each of the second plurality of openings has a second area; wherein the first area is greater than the second area; wherein each of the first plurality of openings is associated with a respective photosensor of the first plurality of photosensors; and wherein each of the second plurality of openings is associated with a respective photosensor of the second plurality of photosensors. In yet another aspect, the invention includes an electronic imaging device wherein the second plurality of photosensors includes at least as many photosensors as the first plurality of photosensors. In a further aspect, the invention includes an electronic imaging device wherein each photosensor of the first plurality of photosensors has disposed proximate to it at least one photosensor of the second plurality of photosensors thereby forming a multi-photosensor imaging element. In another aspect, the invention includes an electronic imaging device wherein the multi-photosensor imaging element includes at least two photosensors of the second plurality of photosensors. In yet another aspect, the invention includes an electronic imaging device wherein the multi-photosensor element includes at least three photosensors of the second plurality of photosensors. In a further aspect, the invention includes an electronic imaging device wherein the multi-photosensor element includes at least four photosensors of the second plurality of photosensors. In another aspect, the invention includes an electronic imaging device wherein each photosensor of the first plurality of photosensors generates a signal proportional to the amount of light incident on the photosensor; wherein each photosensor of the first plurality of photosensors generates a signal proportional to the amount of light incident on the photosensor; wherein the charge coupled device further includes control circuitry for combining the signal from selected photosensors of the first plurality of photosensors with the signals from selected photosensors of the second plurality of photosensors.

In yet another aspect, the invention includes a video inspection device including: a display; an insertion tube having an image sensor and a lens disposed at a distal end thereof, the image sensor in communication with the display, the image sensor including an electronic imager, the electronic imager including: a plurality of photosensors, each photosensor including: a first photodetector having a first light acceptance numerical aperture; and a second photodetector having a second light acceptance numerical aperture, wherein the second light acceptance numerical aperture is smaller than the first light acceptance numerical aperture.

In a further aspect, the invention includes a telecommunications device, comprising: a wireless transceiver; and an image sensor, the image sensor including: a plurality of photosensors, each photosensor including: a first photodetector having a first light acceptance numerical aperture; and a second photodetector having a second light acceptance numerical aperture, wherein the second light acceptance numerical aperture is smaller than the first light acceptance numerical aperture; wherein the electrical signal from the first photodetector and the electrical signal from the second photo detector are combined to produce an image having a depth of field greater than that of an image constructed using only the electrical signals of the first photodetectors.

In another aspect, the invention includes a digital camera, comprising: an image sensor, the image sensor including: a plurality of photosensors, each photosensor including: a first photodetector having a first light acceptance numerical aperture; and a second photodetector having a second light acceptance numerical aperture, wherein the second light acceptance numerical aperture is smaller than the first light acceptance numerical aperture; wherein the electrical signal from the first photodetector and the electrical signal from the second photo detector are combined to produce an image having a depth of field greater than that of an image constructed using only the electrical signals of the first photodetectors.

In yet another aspect, the invention includes a remote visual inspection device comprising: a base module; a computation module; a demountable inspection module; an interconnection module; a power module; an unitary display module and control module; and an imaging sensor, wherein the imaging sensor includes a first plurality of photosensitive elements, each of the first plurality of photosensitive elements having a first light acceptance angle; a second plurality of photosensitive elements, each of the second plurality of photosensitive elements having a second light acceptance numerical aperture, each photosensitive element of the second plurality of photosensitive elements disposed proximate to a respective photosensitive element of the first plurality of photosensitive elements thereby forming a plurality of dual photosensitive elements; wherein the first light acceptance angle is greater than the second light acceptance angle.

While the invention has been particularly shown and described with reference to specific embodiments, it should be understood by those skilled in the art that various changes in form and detail may be made therein without departing from the spirit and scope of the invention as defined by the appended claims.

### PARTS LIST

10 chip
12 array
16 large numerical aperture pixel
16a, 16b, 16c, 16d, 16e, 16f, 16g, 16h, 16i large numerical aperture photosensors
18 small numerical aperture pixel
18a, 18b, 18c, 18d, 18e, 18f, 18g, 18h, 18i small numerical aperture photosensors
22 aperture mask layer
100 image sensor
102 lens
103 focal plane
108 openings
110 opening walls
200 imaging inspection device
202 shipping/operating case
204 power supply
206 handpiece
208 cable
210 monitor
212 joystick
214 insertion tube
216 button set
218 distal end
230 articulation section
300 imaging device

## Claims

1. An electronic imaging device (10), comprising:
a plurality of sensor elements (16,18), wherein a first predetermined number of the plurality of sensor elements has a first numerical aperture value and a second predetermined number of the plurality of sensor elements has a second numerical aperture value, and wherein the first numerical aperture value is different than the second numerical aperture value.

2. The electronic imaging device (10) of claim 1, wherein the plurality of sensor elements (16,18) are arranged such that each of the first predetermined number of the plurality of sensor elements is disposed proximate each of the second predetermined number of the plurality of sensor elements.

3. The electronic imaging device (10) of any preceding claim, wherein the first predetermined number of the plurality of sensor elements (16,18) is equal to the second predetermined number of the plurality of sensor elements.

4. The electronic imaging device (10) of any preceding claim, wherein the plurality of sensor elements (16,18) are arranged in a grid-like array having a plurality of rows and a plurality of columns.

5. An electronic imaging device (10), comprising:
a first plurality of photosensitive elements (16), wherein each of the first plurality of photosensitive elements has a first light acceptance angle;
a second plurality of photosensitive elements (18), wherein each of the second plurality of photosensitive elements has a second light acceptance numerical aperture, and wherein each photosensitive element of the second plurality of photosensitive elements is disposed proximate to a respective photosensitive element of the first plurality of photosensitive elements thereby forming a plurality of dual photosensitive elements; and
wherein the first light acceptance angle is different than the second light acceptance angle.

6. An electronic imaging device (10), comprising:
a plurality of photosensors (16,18), wherein each of the plurality of photosensors includes a plurality of photodetectors comprising:
a first photodetector having a first light acceptance numerical aperture;
a second photodetector having a second light acceptance numerical aperture, wherein the second light acceptance numerical aperture is different than the first light acceptance numerical aperture; and
at least one additional photodetector, wherein at least one of the at least one additional photodetector has a light acceptance numerical aperture that is different than the first light acceptance numerical aperture.

7. An imaging device (200), comprising:
a lens (102);
a semiconductor device disposed (10) proximate to a focal plane of the lens, wherein the semiconductor device includes a plurality of sensor elements (16,18);
an image processor in communication with the semiconductor device; and
wherein a first predetermined number of the plurality of sensor elements (16,18) has a first numerical aperture value and a second predetermined number of the plurality of sensor elements has a second numerical aperture value, and wherein the first numerical aperture value is different than the second numerical aperture value.

8. An electronic imaging device (10) having a focal plane and comprising:
a first plurality of photosensors (16) disposed in a first plane, wherein said first plane is substantially parallel with the focal plane;
a second plurality (18) of photosensors disposed in the first plane; and
an aperture mask (22) disposed proximate the first plurality of photosensors, wherein the aperture mask defines a first plurality of openings and a second plurality of openings, and wherein each of the first plurality of openings has a first area and each of the second plurality of openings has a second area, and wherein the first area is different than the second area, and wherein each of the first plurality of openings is associated with a respective photosensor of the first plurality of photosensors; and wherein each of the second plurality of openings is associated with a respective photosensor of the second plurality of photosensors.

9. A video inspection device (200), comprising:
a display (210);
an insertion tube (214) having an image sensor (10) and a lens (102) disposed at a distal end thereof, wherein the image sensor is in communication with the display and includes an electronic imager, wherein the electronic imager includes:
a plurality of sensor elements (16,18), wherein a first predetermined number of the plurality of sensor elements has a first numerical aperture value and a second predetermined number of the plurality of sensor elements has a second numerical aperture value, and wherein the first numerical aperture value is different than the second numerical aperture value.

10. A remote visual inspection device (200), comprising:
a base module (202);
a computation module (200);
a demountable inspection module;
an interconnection module (206);
a power module (204);
an unitary display module (220) and control module; and
an image sensor (10), wherein the image sensor includes a plurality of sensor elements, and wherein a first predetermined number of the plurality of sensor elements has a first numerical aperture value and a second predetermined number of the plurality of sensor elements has a second numerical aperture value, and wherein the first numerical aperture value is different than the second numerical aperture value.
